# EUROPÄISCHE PATENTSCHRIFT

(11) **EP 1 646 118 B1**
(45) Veröffentlichungstag und Bekanntmachung des Hinweises auf die Patenterteilung: **05.08.2009**
(21) Anmeldenummer: 05021353.7
(22) Anmeldetag: 30.09.2005
(51) Int. Cl.: H02G 3/08, H02G 3/16

(54) **Gehäuseanordnung mit mindestens zwei Verbindungsdosen**
Housing arrangement for at least two connection boxes
Agencement de logement pour au moins deux boites de connexion

(30) Priorität: 05.10.2004 DE 102004048770
(43) Veröffentlichungstag der Anmeldung: 12.04.2006
(73) Patentinhaber: Phoenix Contact GmbH & Co. KG, 32825 Blomberg (DE)
(72) Erfinder: Andresen, Jens, 32825 Blomberg (DE); Lange, Ralf, 32805 Horn-Bad Meinberg (DE)
(74) Vertreter: Gesthuysen, von Rohr & Eggert

(56) Entgegenhaltungen:
- DE-A1- 4 440 662
- DE-A1- 10 010 708
- DE-U1- 20 106 236

## Beschreibung

Die Erfindung betrifft eine Gehäuseanordnung mit mindestens zwei Verbindungsdosen, einem Sockelteil und einem Deckel, wobei die Verbindungsdosen je ein quadratisches Gehäuse aufweisen, in den Gehäusen eine mindestens eine Anschlußklemme aufweisende Klemmenleiste zum elektrischen Anschluß eines elektrischen Kabels oder einer Leitung angeordnet ist und die Gehäuse jeweils mindestens eine Öffnungen für elektrische Kabel oder Leitungen aufweisen. Daneben betrifft die Erfindung noch eine Verbindungsdose mit einem quadratischen Gehäuse, mit mindestens einer mindestens eine Anschlußklemme aufweisenden Klemmenleiste zum elektrischen Anschluß eines elektrischen Kabels oder einer Leitung, wobei das Gehäuse mindestens eine Öffnungen für elektrische Kabel oder Leitungen aufweist.

Verbindungsdosen, die häufig auch als Installationsdosen, Anschlußdosen oder Kabeldosen bezeichnet werden, sind in mannigfachen Ausführungsformen bekannt. Geht es um das Anschließen eines Kabels an ein elektrisches Gerät oder eine Maschine, so wird die Dose als Anschlußdose bezeichnet. Sollen zwei Kabel oder Leitungen miteinander verbunden werden, so wird die Dose als Verbindungsdose bezeichnet. Im allgemeinen sind dabei die Anschlußdose und die Verbindungsdose im wesentlichen identisch ausgebildet, so daß im folgenden stets von einer Verbindungsdose gesprochen wird.

Derartige Dosen bestehen zumeist aus einem Unterteil und einem auf das Unterteil aufschraubbaren Deckel. Die bekannten Dosen haben unterschiedliche Querschnittsgestalt, und in ihrem Innenraum sind Klemmen zum elektrischen Anschluß eines elektrischen Kabels oder einer Leitung unmittelbar in unterschiedlicher Weise angeordnet. In der Regel werden dabei anstelle einzelner Klemmen zusammenhängende Klemmenleisten verwendet, die mehrere Anschlußklemmen aufweisen. Aus der DE 43 20 261 A1 ist bekannt, die Klemmen am Boden des Unterteils des Gehäuses zu befestigen. Das Festlegen der Klemmen am Dosenboden kann durch zusätzliche Befestigungselemente, beispielsweise durch Schrauben, erfolgen. Daneben ist es auch bekannt, dem Boden Vorsprünge anzuformen, auf die die Klemmen aufgesteckt werden können.

An jede Klemme kann dabei eine Ader eines elektrischen Kabels angeschlossen werden. Anstelle von elektrischen Kabeln, die zur Übertragung von Strom dienen, also eine Anlage oder Maschine mit dem notwendigen Betriebsstrom bzw. der notwendigen Betriebsspannung versorgen, können auch elektrische Leitungen an die Verbindungsdosen angeschlossen werden, die in erster Linie oder zusätzlich zur Übertragung von elektrischen Signalen, d. h. zur Übertragung von Informationen, dienen. Dies ist beispielsweise bei sogenannten Sensor-Aktor-Systemen der Fall. Die Verbindungsdosen dienen dabei als mechanischer Schutz für die im Inneren angeordneten Klemmen sowie als elektrischer Schutz für die an den Klemmen realisierte elektrische Verbindung zwischen verschiedenen Kabeln oder Leitungen. Das Gehäuse der Verbindungsdosen besteht daher in der Regel aus einem den jeweiligen Anforderungen genügendem Kunststoff mit einer entsprechenden Schutzklasse, beispielsweise IP 66 oder höher.

Derartige Verbindungsdosen werden oft in einer Mehrzahl zusammen in Schaltschränken angeordnet, wobei die Unterteile häufig Befestigungsmöglichkeiten, beispielsweise Haken oder Löcher, zur Befestigung der Verbindungsdosen auf einer Tragschiene oder an einer Montagewand aufweisen. Zur Verbindung der einzelnen Verbindungsdosen miteinander sind Unterteile bekannt, die an ihren Seitenwänden Haken aufweisen, so daß mehrere Verbindungsdosen zu einer Gehäuseanordnung miteinander verbunden werden können, wobei die einzelnen Verbindungsdosen in einer Ebene nebeneinander und übereinander angeordnet sind. Nachteilig ist hierbei jedoch, daß durch die Verbindung der einzelnen Verbindungsdosen miteinander die Ausrichtung der in den einzelnen Verbindungsdosen ausgebildeten Öffnungen für die ankommenden und abgehenden elektrischen Kabel festgelegt ist. Eine derartige Gehäuseanordnung ist somit nicht für unterschiedliche Einsatzfälle verwendbar, bei denen die ankommenden und die abgehenden Kabel bzw. Leitungen aus unterschiedlichen, nicht im vorhinein festgelegten Richtungen kommen.

Der Erfindung liegt daher die Aufgabe zugrunde, eine eingangs beschriebene Gehäuseanordnung mit mindestens zwei Verbindungsdosen zur Verfügung zu stellen, die dem Benutzer die Möglichkeit gibt, die Gehäuseanordnung modular aufzubauen und an verschiedene Anforderungen, insbesondere hinsichtlich der Richtung der ankommenden und die abgehenden Kabel bzw. Leitungen variabel anzupassen. Dabei sollen die Verbindungsdosen in wirtschaftlicher Weise hergestellt werden können.

Diese Aufgabe ist bei der eingangs beschriebenen Gehäuseanordnung dadurch gelöst, daß die einzelnen Verbindungsdosen um 0°, 90°, 180° oder 270° verdreht zueinander übereinander montierbar sind, daß die Klemmenleisten als Steckverbinder mit einem Steckerteil und einem Buchsenteil ausgebildet sind, daß der Steckverbinder in jeder Verbindungsdose wahlweise in vier jeweils um 90° zueinander verdrehten Positionen befestigbar ist, und daß die Steckverbinder zweier übereinander montierter Verbindungsdosen derart miteinander verbindbar sind, daß der Steckerteil des einen Steckverbinders in den Buchsenteil des anderen Steckverbinders einsteckbar ist.

Dadurch, daß die einzelnen Verbindungsdosen wahlweise um 0°, 90°, 180° oder 270° zueinander verdreht aufeinander montierbar sind, ist zunächst die Möglichkeit geschaffen worden, die einzelnen Verbindungsdosen mit den in den Gehäusen angeordneten Öffnungen jeweils optimal auf die Richtung der ankommenden bzw. abgehenden Kabel oder Leitungen auszurichten. Die erfindungsgemäße Gehäuseanordnung stellt somit einen modular aufbaubaren Energieverteiler dar, bei dem die erforderliche Anzahl an Verbindungsdosen entsprechend einem Turm übereinander montiert werden kann. Um die elektrische Verbindung zwischen den einzelnen Verbindungsdosen, d. h. zwischen den einzelnen Klemmleisten möglichst einfach, insbesondere ohne zusätzlichen Verdrahtungsaufwand realisieren zu können, sind die einzelnen Klemmenleisten als Steckverbinder mit einem Steckerteil und einem Buchsenteil ausgebildet. Die elektrische Verbindung zwischen den einzelnen Steckverbindern und damit auch zwischen den an den Steckverbindern jeweils angeschlossenen elektrischen Kabeln erfolgt somit einfach dadurch, daß bei der Montage zweier Verbindungsdose übereinander der Steckerteil des einen - oberen - Steckverbinders in den Buchsenteil des anderen - unteren - Steckverbinders eingesteckt wird.

Diese kaskadierbare Verbindung der einzelnen Steckverbinder untereinander macht es erforderlich, daß die einzelnen Steckverbinder jeweils zueinander ausgerichtet, d. h. übereinander angeordnet sind. Da die einzelnen Verbindungsdosen jedoch wahlweise um 0°, 90°, 180° oder 270° verdreht übereinan der montierbar sein sollen, wären vier unterschiedliche Verbindungsdosen erforderlich, bei denen der Steckverbinder in vier jeweils um 90° zueinander verdrehten Positionen im Gehäuse montiert ist. Zur Vermeidung einer derartigen Typenvielfalt und um auch vor Ort bezüglich der Ausrichtung der einzelnen Verbindungsdosen noch flexibel zu sein, ist erfindungsgemäß vorgesehen, daß der Steckverbinder in jeder Verbindungsdose in vier jeweils um 90° zueinander verdrehten Positionen befestigbar ist. Der Steckverbinder ist somit nicht von vornherein fest mit der Verbindungsdose verbunden, sondern es besteht die Möglichkeit, den Steckverbinder beim Zusammenbau der Gehäuseanordnung - entsprechend der Ausrichtung der einzelnen Verbindungsdosen - wahlweise in einer von vier Positionen im Gehäuse zu befestigen.

Vorzugsweise ist dabei vorgesehen, daß im Bereich der Ecken im Inneren des Gehäuses der Verbindungsdosen Stege und an den Enden der Steckverbinder korrespondierende Führungsnuten angeordnet sind, so daß der Steckverbinder mit den Führungsnuten auf die Stege im Gehäuse aufschiebbar ist. Dadurch ist eine einfache, insbesondere werkzeuglose Befestigung der Steckverbinder im Gehäuse der Befestigungsdose möglich. Selbstverständlich besteht dabei auch die Möglichkeit, an den Enden der Steckverbinder entsprechende Stege und im Gehäuse der Verbindungsdosen korrespondierende Führungsnuten anzuordnen. Ebenso können an dem Steckverbinder Rastarm und im Gehäuse korrespondierende Rastöffnungen bzw. in dem Steckverbinder Rastöffnungen und am Gehäuse korrespondierende Rastarm vorgesehen sein.

Gemäß einer zweiten Lehre der Erfindung, die vorzugsweise zusammen mit der zuvor beschriebenen ersten Lehre der Erfindung verwirklicht ist, jedoch auch unabhängig davon realisiert werden kann, ist die eingangs beschriebene Gehäuseanordnung dadurch besonders einfach modular aufbaubar, daß die einzelnen Verbindungsdosen übereinander montierbar sind, daß am Gehäuse jeder Verbindungsdose mindestens ein Verriegelungselement derart schwenkbar angeordnet ist, daß es aus einer ersten - offenen - Stellung in eine zweite - verriegelnde - Stellung verbringbar ist, und daß im Bereich der Ecken außen am Gehäuse jeder Verbindungsdose vorstehende Rippen ausgebildet sind, wobei das Verriegelungselement im wesentlichen U-förmig gebogen ist und einen als Betätigungsbügel dienenden U-Rücken und zwei U-Schenkel aufweist, deren Enden je eine Ausnehmung aufweisen, wobei die beiden Ausnehmungen in der zweiten - verriegelnden - Stellung jeweils eine Rippe an einer Ecke des Gehäuses einer zweiten Verbindungsdose umgreifen.

Der modulare Aufbau der erfindungsgemäßen Gehäuseanordnung ist auch bei der zweiten Lehre der Erfindung zunächst dadurch gewährleistet, daß die einzelnen Verbindungsdosen übereinander montierbar sind. Um nun auf einfache aber dennoch sichere Art und Weise die einzelnen Verbindungsdosen aneinander zu befestigen, ist am Gehäuse jeder Verbindungsdose mindestens ein Verriegelungselement schwenkbar angeordnet, wobei das Verriegelungselement aus einer ersten - offenen - Stellung in eine zweite - verriegelnde - Stellung verschwenkt werden kann.

Das Verriegelungselement ist dabei im wesentlichen U-förmig gebogen, so daß es eine Seite des Gehäuses der Verbindungsdose umgreifen kann, wodurch die Außenabmessungen der Verbindungsdose nur unwesentlich vergrößert werden. Neben dem als Betätigungsbügel dienenden U-Rücken weist das Verriegelungselement zwei U-Schenkel auf, in deren Ende je eine Ausnehmung ausgebildet ist, die zur Verriegelung mit dem Gehäuse einer zweiten Verbindungsdose dient. Hierzu sind im Bereich der Ecken außen am Gehäuse jeder Verbindungsdose vorstehende Rippen ausgebildet, die in der zweiten - verriegelnden - Stellung von den Ausnehmungen in den U-Schenkeln des Betätigungsbügels einer anderen Verbindungsdose umklammert werden. Zur Befestigung zweier Verbindungsdosen übereinander wirkt somit das Verriegelungselement der einen Verbindungsdose mit den am Gehäuse ausgebildeten Rippen der anderen Verbindungsdose zusammen, wobei durch die schwenkbare Anordnung des Verriegelungselements die in den U-Schenkeln ausgebildete Ausnehmungen einfach mit den Rippen am Gehäuse in Eingriff gebracht werden können.

Gemäß einer bevorzugten Ausgestaltung sind an jeder Verbindungsdose zwei Verriegelungselemente an zwei gegenüberliegenden Seiten des Gehäuses angeordnet, wodurch eine sichere Befestigung der einzelnen Verbindungsdosen miteinander gewährleistet ist. Vorteilhafterweise ist dabei in den Ausnehmungen in den Enden der U-Schenkel der Verriegelungselemente eine Vertiefung und an den Enden der Rippen am Gehäuse eine Verdickung ausgebildet, so daß die Verdickung an den Rippen in der zweiten - verriegelnden - Stellung in die Vertiefung in der Ausnehmung einrastet. Hierdurch ist auf besonders einfache Art und Weise eine Verriegelung realisiert, die bei einer entsprechenden Dimensionierung der Vertiefung und der Verdickung ein ungewolltes Lösen der Verriegelung verhindert.

Die schwenkbare Lagerung des vorzugsweise aus Metall hergestellten Verrieglungselements am Gehäuse der Verbindungsdose erfolgt gemäß einer bevorzugten Ausgestaltung dadurch, daß in den U-Schenkeln des Verriegelungselements jeweils ein Loch ausgebildet ist, und daß korrespondierend dazu an zwei gegenüberliegenden Seiten des Gehäuses zwei Stifte vorgesehen sind, wobei das Verriegelungselement mit den Löchern auf die Stifte aufrastbar ist, so daß die Stifte die Drehachse für das Verriegelungselement bilden. Die Stifte sind dabei vorzugsweise einstückig mit dem Gehäuse verbunden. Daneben besteht grundsätzlich auch die Möglichkeit, an zwei gegenüberliegenden Seiten des Gehäuses entsprechende Löcher auszubilden, in die dann an den U-Schenkeln des Verriegelungselements angeordnete Stifte einrasten können.

Gemäß einer weiteren, besonders vorteilhaften Ausgestaltung der zweiten Lehre der Erfindung ist an den U-Schenkeln des Verriegelungselements ein federnder Rastarm ausgebildet, dessen Ende in der ersten - offenen - Stellung an einer am Gehäuse der Verbindungsdose ausgebildeten Kante anliegt, so daß das Verriegelungselement in der ersten - offenen - Stellung gehalten wird. Hierdurch ist gewährleistet, daß bei der Montage der Gehäuseanordnung das Verriegelungselement nicht ungewollt in die zweite - verriegelnde - Stellung gelangt, wodurch zunächst die Montage zweier Verbindungsdosen miteinander verhindert würde. Sind die beiden Verbindungsdosen in der gewollten Orientierung übereinander angeordnet, so wird bei einer gewollten Betätigung des Verriegelungselements der Rastarm aufgrund seiner federnden Eigenschaft aus seiner sperrenden Position gelöst, so daß das Verriegelungselement in die zweite - verriegelnde - Stellung geschwenkt werden kann.

Vorzugsweise ist dabei vorgesehen, daß in der zweiten - verriegelnden - Stellung der federnde Rastarm wieder entspannt ist, wobei das wulstartige Ende des Rastarms dann an einer zweiten Kante am Gehäuse der Verbindungsdose anliegt, so daß das Verriegelungselement auch durch den federnden Rastarm in der zweiten - verriegelnden - Stellung gehalten wird.

Eingangs ist ausgeführt worden, daß die Gehäuseanordnung mindestens zwei Verbindungsdosen, einen Sockelteil und einen Deckelteil aufweist. Durch die erfindungsgemäße Anordnung der einzelnen Verbindungsdosen übereinander ist für die gesamte Gehäuseanordnung nur ein Deckel und ein Sockelteil erforderlich. Vorzugsweise sind dabei der Deckel und das Sockelteil separate Bauteile, so daß die einzelnen Verbindungsdosen identisch ausgebildet sein können. Die Gehäuse der einzelnen Verbindungsdosen sind dann rahmenartig ausgebildet, so daß sie oben und unten offen sind.

Grundsätzlich besteht jedoch auch die Möglichkeit, das Sockelteil oder den Deckel mit dem Gehäuse einer Verbindungsdose einstückig auszubilden. Ist das Sockelteil als separates Bauteil ausgebildet, so sind gemäß einer bevorzugten Ausgestaltung der zweiten Lehre der Erfindung am Sockelteil im Bereich der Ecken außen vorstehende Rippen ausgebildet, die in die Ausnehmung in den Enden der U-Schenkel der Verriegelungselemente eingreifen können. Dadurch kann eine Verbindungsdose sowohl auf einer anderen Verbindungsdose als auch auf dem Sockelteil befestigt werden. Das Sockelteil selber weist vorzugsweise einen umlaufenden Rand auf, in dem Bohrungen vorgesehen sind, durch die das Sockelteil mittels Schrauben in einem Schaltschrank oder an einem Maschinengehäuse befestigbar ist. Außerdem kann auch das Sockelteil mindestens eine Öffnung für ein elektrisches Kabel oder eine Leitung aufweisen.

Wie eingangs bereits ausgeführt worden ist, betrifft die vorliegende Erfindung neben einer Gehäuseanordnung mit mindestens zwei Verbindungsdosen, einem Sockelteil und einem Deckel auch eine einzelne Verbindungsdose mit einem quadratischen Gehäuse und mit mindestens einer Klemmenleiste zum elektrischen Anschluß eines elektrischen Kabels oder einer Leitung, wobei das Gehäuse mindestens eine Öffnung für elektrische Kabel oder Leitungen aufweist. Die erfindungsgemäße Verbindungsdose, die insbesondere zur Verwendung bei einer zuvor beschriebenen Gehäuseanordnung geeignet ist, ist zunächst und im wesentlichen dadurch gekennzeichnet, daß die Klemmenleiste als Steckverbinder mit einem Steckerteil und einem Buchsenteil ausgebildet ist, und daß der Steckverbinder wahlweise in vier jeweils um 90° zueinander verdrehten Positionen im Gehäuse befestigbar ist.

Wie zuvor bereits im Zusammenhang mit der erfindungsgemäßen Gehäuseanordnung gemäß der ersten Lehre der Erfindung ausgeführt worden ist, ist durch die Ausbildung der Klemmenleiste als Steckverbinder mit einem Stekkerteil und einem Buchsenteil eine besonders einfache Verbindung des Steckverbinders der Verbindungsdose mit dem Steckverbinder einer zweiten Verbindungsdose möglich, ohne daß hierzu eine Verdrahtung der einzelnen Anschlußklemmen der Klemmenleisten untereinander erforderlich ist. Dadurch, daß der Steckverbinder nicht fest in dem Gehäuse angeordnet, sondern wahlweise in einer von vier Positionen im Gehäuse befestigbar ist, ist nicht nur eine optimale Anpassung der Verbindungsdose an die jeweiligen Einsatzbedingungen, insbesondere an die Richtung eines ankommenden oder abgehenden Kabels gegeben, sondern darüber hinaus auch die Möglichkeit geschaffen, die einzelnen Adern eines anzuschließenden elektrischen Kabels zunächst an die einzelnen Anschlußklemmen des Steckverbinders anzuschließen, und erst danach den Steckverbinder im Gehäuse zu befestigen. Insbesondere bei Verbindungsdosen mit relativ kleinen Abmessungen wird dadurch der Anschluß eines elektrischen Kabels an den Steckverbinder und damit auch die Verbindungsdose wesentlich erleichtert.

Die Anschlußklemmen des Steckverbinders sind vorzugsweise als Schraub- oder Federkraftklemmen ausgebildet. Beide Anschlußarten haben sich in der Praxis bereits millionenfach bewährt und gewährleisten auch bei kleinen Abmessungen der Verbindungsdose und damit auch des Steckverbinders eine einfache und sichere Kontaktierung der einzelnen Adern eines anzuschließenden elektrischen Kabels. Darüber hinaus besteht grundsätzlich jedoch auch die Möglichkeit, die Anschlußklemmen des Steckverbinders in Schneid-Anschlußtechnik auszuführen.

Um die verschiedenen Anwendungsmöglichkeiten der erfindungsgemäßen Verbindungsdose noch weiter zu erhöhen, weist das Gehäuse vorzugsweise zwei Öffnungen für elektrische Kabel oder Leitungen auf, die in zwei einander gegenüberliegenden Seitenwänden des Gehäuses ausgebildet sind. Dies schafft die Möglichkeit, nicht nur ein ankommendes oder ein abgehendes Kabel sondern darüber hinaus auch ein durchgehendes Kabel an die Verbindungsdose anzuschließen. Eine derartige Verbindungsdose kann dann als sogenannter T-Verteiler eingesetzt werden. Das durchgehende Kabel, welches durch die eine Öffnung in das Gehäuse eingeführt und durch die andere Öffnung aus dem Gehäuse rausgeführt wird, ist dann innerhalb des Gehäuses mit seinen einzelnen Adern an die einzelnen Anschlußklemmen des Steckverbinders angeschlossen.

Gemäß einer weiteren vorteilhaften Ausgestaltung der erfindungsgemäßen Verbindungsdose ist ein U-förmiges Metallteil vorgesehen, wobei am Rücken des Metallteils mindestens ein Verbindungssteg angeordnet ist, der mit einer Anschlußklemme des Steckverbinders verbindbar ist. Ein derartiges Metallteil kann beispielsweise als Erdungsmetall vorgesehen sein, wobei dann der Verbindungssteg in die Anschlußklemme des Steckverbinders eingesteckt wird, die mit der Erdpotential führenden Ader des anzuschließenden Kabels verbunden wird. Daneben besteht jedoch auch die Möglichkeit, an dem Metallteil mehrere Verbindungsstege vorzusehen, so daß das Metallteil zur Brückung einzelner Anschlußklemmen verwendet werden kann. Zur einfachen Befestigung des Metallteils in dem Gehäuse sind im Metallteil, vorzugsweise an den beiden Ecken, jeweils eine Bohrung zum Einstecken einer Schraube ausgebildet. Dadurch kann das Metallteil einfach im Gehäuse festgeschraubt werden, wozu vorzugsweise in den Ecken des Gehäuses Dome vorgesehen sind, die als Hohldome ausgebildet sind und Innengewinde zum Einschrauben der Schrauben aufweisen.

Wie zuvor bereits im Zusammenhang mit der erfindungsgemäßen Gehäuseanordnung gemäß der zweiten Lehre der Erfindung ausgeführt worden ist, ist an dem Gehäuse gemäß einer bevorzugten Ausgestaltung mindestens ein Verriegelungselement schwenkbar angeordnet, mit dessen Hilfe das Gehäuse mit dem Gehäuse einer zweiten Verbindungsdose oder mit einem Sockelteil verrastet werden kann. Bezüglich der besonderen Ausgestaltung des Verriegelungselements wird auf die vorherigen Ausführungen im Zusammenhang mit der Gehäuseanordnung sowie auf die nachfolgende Beschreibung eines bevorzugten Ausführungsbeispiels verwiesen.

Im einzelnen gibt es nun eine Vielzahl von Möglichkeiten, die erfindungsgemäße Gehäuseanordnung sowie die erfindungsgemäße Verbindungsdose auszugestalten und weiterzubilden. Dazu wird verwiesen einerseits auf die den Patentansprüchen 1, 4 und 14 nachgeordneten Patentansprüche, andererseits auf die nachfolgende Beschreibung eines bevorzugten Ausführungsbeispiels in Verbindung mit der Zeichnung. In der Zeichnung zeigen
- Fig. 1: eine erfindungsgemäße Gehäuseanordnung mit zwei Verbindungsdosen, einem Sockelteil und einem Deckel, im montierten Zustand,
- Fig. 2: die Gehäuseanordnung gemäß Fig. 1, im noch nicht montierten Zustand,
- Fig. 3: eine perspektivische Darstellung einer erfindungsgemäßen Verbindungsdose, von unten,

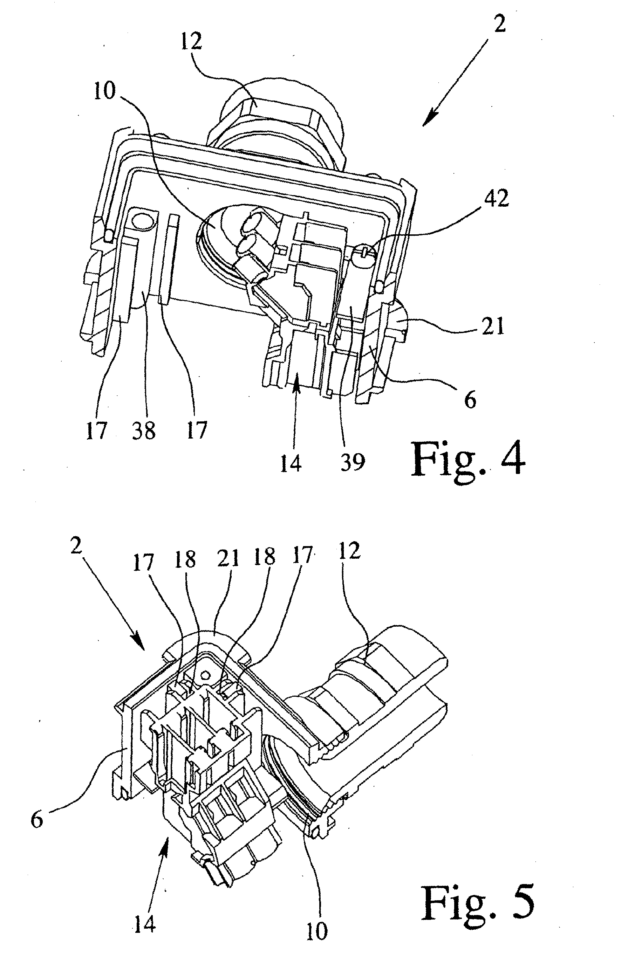

- Fig. 4: eine Teilansicht der Verbindungsdose gemäß Fig. 3, im Schnitt, von unten,
- Fig. 5: eine weitere Teilansicht der Verbindungsdose gemäß Fig. 1, im Schnitt von oben,
- Fig. 6: zwei Steckverbinder zweier erfindungsgemäßer Verbindungsdosen im noch nicht zusammengesteckten Zustand (Fig. 6a) und im zusammengesteckten Zustand (Fig. 6b),
- Fig. 7: eine vergrößerte Darstellung eines Teilbereichs einer erfindungsgemäßen Verbindungsdose mit einem Verriegelungselement in der ersten - offenen - Stellung (Fig. 7a) und in der zweiten - verriegelnden - Stellung (Fig. 7b) und
- Fig. 8: ein als Erdungsmetall dienendes Metallteil zur Verwendung in einer Verbindungsdose.

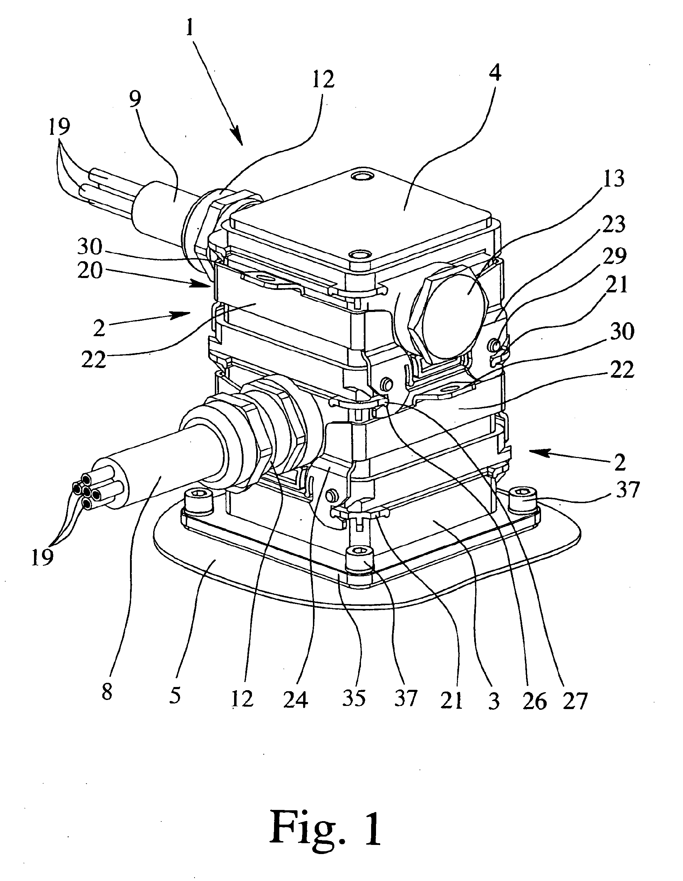

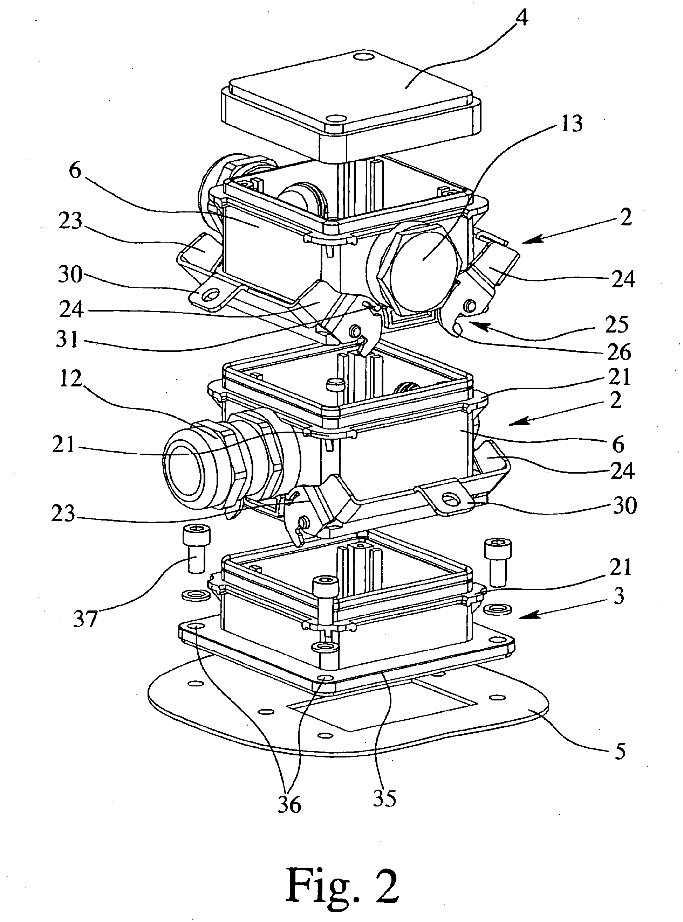

Die Fig. 1 und 2 zeigen eine Gehäuseanordnung 1 mit zwei Verbindungsdosen 2, einem Sockelteil 3 und einem Deckel 4. Die Gehäuseanordnung 1 ist dabei über das Sockelteil 3 mit einem hier nur ausschnittsweise dargestellten Maschinengehäuse 5 befestigt. Die beiden Verbindungsdosen 2 weisen jeweils ein quadratisches Gehäuse 6 auf, in dem eine mehrere Anschlußklemmen 7 aufweisende Klemmenleiste zum Anschluß eines elektrischen Kabels 8, 9 angeordnet ist. Hierfür sind an zwei gegenüberliegenden Seiten des Gehäuses 6 jeweils eine Öffnung 10, 11 ausgebildet, wobei in dem dargestellten Ausführungsbeispiel nur in jeweils einer Öffnung 10 des Gehäuses 6 ein Kabel 8, 9 mit einer Kabelverschraubung 12 an die Verbindungsdose 2 angeschlossen ist, während die zweite Öffnung 11 mittels eines Blindstopfens 13 verschlossen ist. Die beiden Kabel 8, 9 werden aus zwei um 90° gedrehte Richtungen zu den beiden Verbindungsdosen 2 geführt, so daß die beiden Verbindungsdosen 2 auch um 90° zueinander verdreht angeordnet sind.

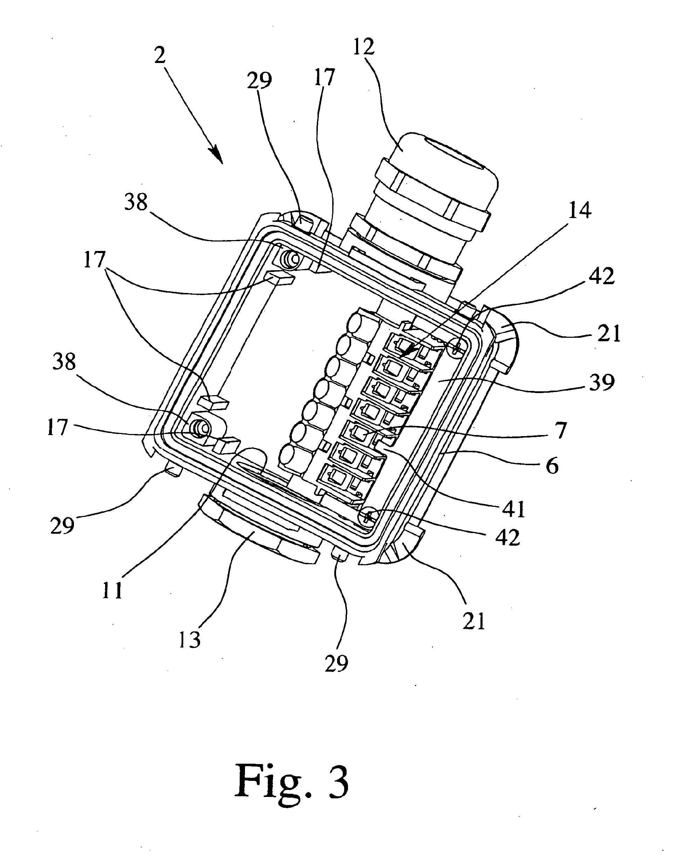

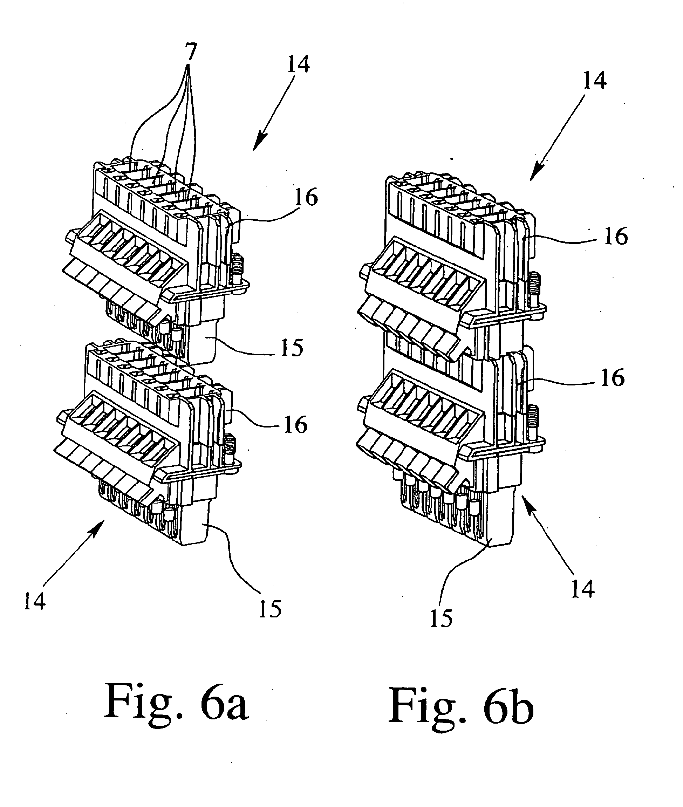

Wie insbesondere aus den Fig. 3 und 6 ersichtlich ist, sind die Klemmenleisten als Steckverbinder 14 ausgebildet, die jeweils einen Steckerteil 15 und einen Buchsenteil 16 aufweisen. Zur Montage des Steckverbinders 14 im Gehäuse 6 der Verbindungsdose 2 sind im Bereich der Ecken im Inneren des Gehäuses 6 jeweils zwei Stege 17 und an den Enden des Steckverbinders 14 korrespondierende Führungsnuten 18 ausgebildet. Durch die zylindrische Grundform des Gehäuses 6 und die Anordnung der Stege 17 in allen vier Ecken des Gehäuses 6 besteht die Möglichkeit, den Steckverbinder 14 wahlweise in einer von vier, jeweils um 90° zueinander verdrehten Positionen im Gehäuse 6 zu befestigen.

Bei der in Fig. 1 dargestellten Gehäuseanordnung sind die erste, untere Verbindungsdose 2 und die zweite, obere Verbindungsdose 2 um 90° verdreht übereinander angeordnet. Durch die Möglichkeit, die Steckverbinder 14 wahlweise in vier jeweils um 90° zueinander verdrehte Positionen im Gehäuse 6 zu befestigen, können zwei Steckverbinder 14 zweier übereinander angeordneter Verbindungsdosen 2 miteinander verbunden werden, d. h. ineinandergesteckt werden, unabhängig davon wie die beiden Verbindungsdosen 2 zueinander ausgerichtet sind, d. h. ob die beiden Verbindungsdosen um 0°, 90°, 180° oder 270° zueinander verdreht sind. Dadurch steht ein modular aufgebauter, einfach kaskadierbarer Energieverteiler zur Verfügung, bei dem die in den einzelnen Verbindungsdosen 2 ausgebildeten Öffnungen 10, 11 entsprechend der Richtung der ankommenden und abgehenden Kabel 8, 9 ausgerichtet sind.

Dadurch, daß die Steckverbinder 14 nicht von vornherein fest in dem Gehäuse 6 der Verbindungsdosen 2 angeordnet sind, besteht die Möglichkeit, die einzelnen Adern 19 eines anzuschließenden Kabels 8, 9 zunächst an die einzelnen Anschlußklemmen 7 des Steckverbinders 14 anzuschließen, und erst danach den Anschlußstecker 14 in das Gehäuse 6 einzusetzen. Dabei wird dann das bereits an den Steckverbinder 14 angeschlossene Kabel 8, 9 von innen aus dem Gehäuse 6 durch die Öffnung 10 nach außen geführt. Anschließend kann das erste, untere Verbindungsgehäuse 2 auf das Sockelteil 3 und dann das zweite, obere Verbindungsgehäuse 2 auf das untere Verbindungsgehäuse 2 aufgesetzt werden. Dabei wird das Steckerteile 15 des Steckverbinders 14 der oberen Verbindungsdose 2 in das Buchsenteil 16 des Steckverbinders 14 der unteren Verbindungsdose 2 eingesteckt, wodurch die beiden Steckverbinder 14 mechanisch und elektrisch miteinander verbunden werden.

Zur Befestigung der einzelnen Verbindungsdosen 2 übereinander und zur Befestigung einer Verbindungsdose 2 auf dem Sockelteil 3 sind am Gehäuse 6 jeder Verbindungsdose 2 zwei Verriegelungselemente 20 schwenkbar angeordnet und im Bereich der Ecken vorstehende Rippen 21 außen am Gehäuse 6 ausgebildet. Das Verriegelungselement 20, das aus einer ersten - offenen - Stellung in eine zweite - verriegelnde - Stellung schwenkbar ist, ist im wesentlichen U-förmig ausgebildet, wobei das Verriegelungselement 20 einen als Betätigungsbügel dienenden U-Rücken 22 und zwei U-Schenkel 23, 24 aufweist, in deren Enden jeweils eine Ausnehmung 25 ausgebildet ist. Die Verriegelung zweier Verbindungsdosen 2 miteinander erfolgt dabei dadurch, daß - nachdem die beiden Verbindungsdosen 2 aufeinandergesetzt worden sind - das Verriegelungselement 20 aus der ersten - offenen - Stellung in die zweite - verriegelnde - Stellung verschwenkt wird, in der die an dem ersten, unteren Gehäuse 6 ausgebildeten Rippen 21 von den in den Enden der U-Schenkel 23, 24 ausgebildeten Ausnehmungen 25 umgriffen werden. Durch die Ausbildung der einseitig offenen Ausnehmungen 25 in den Enden der U-Schenkel 23, 24 können die Enden der U-Schenkel 23, 24 auch als hakenförmig bezeichnen, wobei die Enden der U-Schenkel 23, 24 in der zweiten - verriegelnden - Stellung die Rippen 21 untergreift.

Ebenso wie an den Gehäusen 6 der Verbindungsdosen 2 sind auch am Sokkelteil 3 außen im Bereich der Ecken vorstehende Rippen 21 ausgebildet, so daß jede Verbindungsdose 2 mittels des Verriegelungselements 20 entweder auf einem Sockelteil 3 oder auf einer anderen Verbindungsdose 2 befestigt werden kann.

Um ein ungewolltes Zurückschwenken des Verriegelungselements 20 aus der zweiten - verriegelnden - Stellung zu verhindern, ist in den Ausnehmungen 25 eine Vertiefung 26 und an den Enden der Rippen 21 eine Verdickung 27 ausgebildet. Dadurch können die Rippen 21 mit ihren Enden in den Ausnehmungen 25 in der zweiten - verriegelnden - Stellung einrasten. Das U-förmige Verriegelungselement 20 ist dadurch schwenkbar an dem Gehäuse 6 gelagert, daß in den beiden U-Schenkel 23, 24 jeweils ein Loch 28 ausgebildet ist und korrespondierend dazu an zwei gegenüberliegenden Seiten des Gehäuses 6 zwei Stifte 29 angeordnet sind, die die Drehachse für das Verriegelungselement 20 bilden. Zur leichteren Betätigung des in der zweiten Stellung eng an dem Gehäuse 6 anliegenden Verriegelungselements 20 ist an dessen U-Rücken 22 ein Griffabschnitt 30 abgebogen.

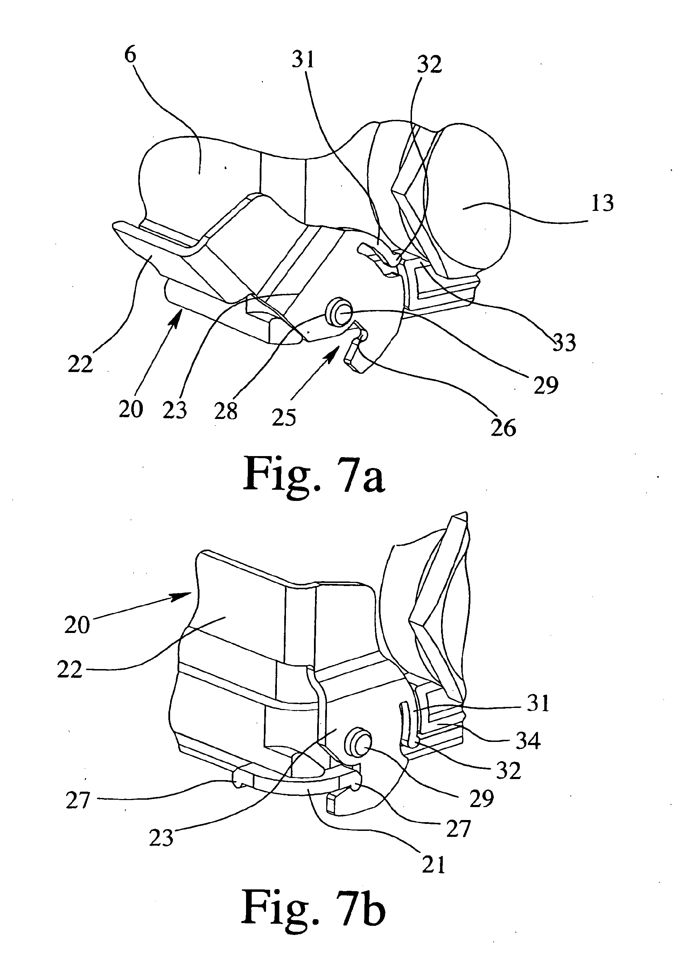

Aus den Fig. 7a und 7b ist ersichtlich, daß an den U-Schenkeln 23, 24 des Verriegelungselements 20 ein federnder Rastarm 31 ausgebildet ist. Der Rastarm 31 verläuft dabei im wesentlichen radial zur Drehachse des Verriegelungselements 20 und weist ein wulstartiges Ende 32 auf, das in der ersten - offenen - Stellung des Verriegelungselements 20 an einer am Gehäuse 6 ausgebildeten ersten Kante 33 anliegt bzw. sich an dieser Kante 33 abstützt. Dadurch wird das Verriegelungselement 20 in der ersten - offenen - Stellung gehalten, so daß die einzelnen Verbindungsdosen 2 problemlos aufeinandergesetzt und dann durch ein gewolltes Verschwenken der Verriegelungselemente 20 miteinander fixiert werden können. Durch die federnde Eigenschaft des Rastarms 30 sowie dessen wulstartiges Ende 32 und eine entsprechende Abrundung an der Kante 33 kann dabei der Rastarm 31 problemlos beim Verschwenken des Verriegelungselements 20 aus seiner sperrenden Position gelöst werden, so daß das Verriegelungselement 20 in die zweite - verriegelnde - Stellung geschwenkt werden kann.

Aus der Fig. 7b ist erkennbar, daß der Rastarm 31 in der zweiten - verriegelnden - Stellung des Verriegelungselements 20 entspannt ist, wobei das wulstartige Ende 32 des Rastarms 31 nunmehr eine zweite Kante 34 untergreift, die der ersten Kante 33 gegenüberliegend angeordnet ist. Dadurch bewirkt der Rastarm 31 eine zusätzliche Verrastung des Verriegelungselements 20 in der zweiten - verriegelnden - Stellung.

Zur Fixierung des Sockelteils 3 an einem Maschinengehäuse 5 oder in einem - hier nicht dargestellten - Schaltschrank, weist das Sockelteil 3 einen umlaufenden Rand 25 auf, wobei in den vier Ecken des Randes 35 jeweils eine Bohrung 36 ausgebildet ist, durch die das Sockelteil 3 und damit die gesamte Gehäuseanordnung 1 mittels Schrauben 37 an dem Maschinengehäuse 5 befestigbar ist.

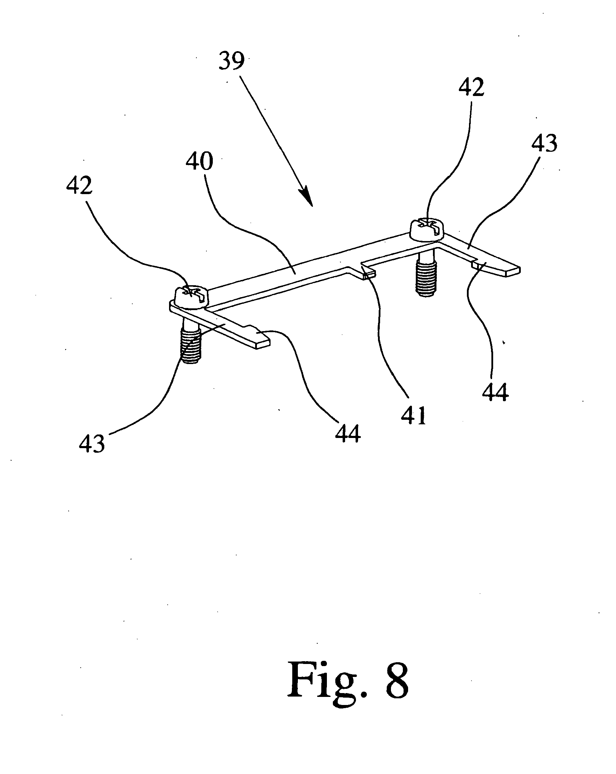

Wie aus der Fig. 3 ersichtlich ist, sind im Inneren des Gehäuses 6 in den Ecken Dome 38 vorgesehen, die jeweils eine Bohrung mit einem Innengewinde aufweist. Die Dome 38 dienen dabei zur Befestigung eines in Fig. 8 dargestellten Metallteils 39, das im wesentlichen U-förmig ausgebildet ist, wobei am Rücken 40 des Metallteils 39 ein Verbindungssteg 41 angeordnet ist. Der Verbindungssteg 41 kann gemäß Fig. 3 in eine Anschlußklemme 7 des Steckverbinders 14 eingesteckt werden, so daß das Metallteil 39 als Erdungsmetall für die Verbindungsdose 2 fungieren kann. Zur Fixierung des Metallteils 39 in dem Gehäuse 6 sind in den Ecken des Metallteils 39 Bohrungen ausgebildet, durch die die Schrauben 42 in die Innengewinde der Dome 38 eingeschraubt werden können. Über an den U-Schenkeln 43 des Metallteils 39 ausgebildete Haken 44 kann der Steckverbinder 14 darüber hinaus zusätzlich in dem Gehäuse 6 fixiert werden.

## Patentansprüche

1. Gehäuseanordnung mit mindestens zwei Verbindungsdosen (2), einem Sockelteil (3) und einem Deckel (4), wobei die Verbindungsdosen (2) je ein quadratisches Gehäuse (6) aufweisen, in den Gehäusen (6) eine mindestens eine Anschlußklemme (7) aufweisende Klemmenleiste zum elektrischen Anschluß eines elektrischen Kabels (8, 9) oder einer Leitung angeordnet ist und die Gehäuse (6) jeweils mindestens eine Öffnungen (10, 11) für elektrische Kabel (8, 9) oder Leitungen aufweisen,
**dadurch gekennzeichnet,**
**daß** die einzelnen Verbindungsdosen (2) um 0°, 90°, 180° oder 270° zueinander verdreht übereinander montierbar sind,
**daß** die Klemmenleisten als Steckverbinder (14) mit einem Steckerteil (15) und einem Buchsenteil (16) ausgebildet sind,
**daß** die Steckverbinder (14) in vier jeweils um 90° zueinander verdrehten Positionen in einer Verbindungsdose (2) befestigbar sind, und
**daß** die Steckverbinder (14) zweier übereinander montierter Verbindungsdosen (2) derart miteinander verbindbar sind, daß der Steckerteil (15) des einen Steckverbinders (14) in den Buchsenteil (16) des anderen Steckverbinders (14) einsteckbar ist.

2. Gehäuseanordnung nach Anspruch 1, **dadurch gekennzeichnet, daß** im Bereich der Ecken im Inneren des Gehäuses (6) der Verbindungsdosen (2) Stege (17) und an den Enden der Steckverbinder (14) korrespondierende Führungsnuten (18) angeordnet sind, derart, daß die Steckverbinder (14) mit ihren Führungsnuten (18) auf die Stege (17) aufschiebbar sind.

3. Gehäuseanordnung nach Anspruch 1 oder 2, **dadurch gekennzeichnet, daß** die Anschlußklemmen (7) der Steckverbinder (14) als Schraub- oder Federkraftklemmen ausgebildet sind.

4. Gehäuseanordnung mit mindestens zwei Verbindungsdosen (2), einem Sockelteil (3) und einem Deckel (4), wobei die Verbindungsdosen (2) je ein quadratisches Gehäuse (6) aufweisen, in den Gehäusen (6) eine mindestens eine Anschlußklemme (7) aufweisende Klemmenleiste zum elektrischen Anschluß eines elektrischen Kabels (8, 9) oder einer Leitung angeordnet ist und die Gehäuse (6) jeweils mindestens eine Öffnungen (10, 11) für elektrische Kabel (8, 9) oder Leitungen aufweisen, insbesondere nach einem der Ansprüche 1 bis 3,
**dadurch gekennzeichnet,**
**daß** die einzelnen Verbindungsdosen (2) übereinander montierbar sind,
**daß** am Gehäuse (6) jeder Verbindungsdose (2) mindestens ein Verriegelungselement (20) derart schwenkbar angeordnet ist, daß es aus einer ersten - offenen - Stellung in eine zweite - verriegelnde - Stellung verbringbar ist,
**daß** im Bereich der Ecken außen am Gehäuse (6) jeder Verbindungsdose (2) vorstehende Rippen (21) ausgebildet sind, und
**daß** das Verriegelungselement (20) im wesentlichen U-förmig gebogen ist und einen als Betätigungsbügel dienenden U-Rücken (22) und zwei U-Schenkel (23, 24) aufweist, deren Enden je eine Ausnehmung (25) aufweisen, wobei die beiden Ausnehmungen (25) in der zweiten - verriegelnden - Stellung jeweils die Rippe (21) einer Ecke des Gehäuses (6) einer zweiten Verbindungsdose (2) umgreifen.

5. Gehäuseanordnung nach Anspruch 4, **dadurch gekennzeichnet, daß** an jeder Verbindungsdose (2) zwei Verriegelungselemente (20) an zwei gegenüberliegenden Seiten des Gehäuses (6) schwenkbar angeordnet sind.

6. Gehäuseanordnung nach Anspruch 4 oder 5, **dadurch gekennzeichnet, daß** die Ausnehmungen (25) in den Enden der U-Schenkel (23, 24) der Verriegelungselemente (20) eine Vertiefung (26) und die Enden der Rippen (21) eine Verdickung (27) aufweisen, so daß in der zweiten - verriegelnden - Stellung die Verdickung (27) in der Vertiefung (26) einrastet.

7. Gehäuseanordnung nach einem der Ansprüche 4 bis 6, **dadurch gekennzeichnet, daß** in den U-Schenkel (23, 24) des Verriegelungselements (20) jeweils ein Loch (28) ausgebildet ist, und daß an zwei gegenüberliegenden Seiten des Gehäuses (6) zwei Stifte (29) vorgesehen sind, die die Drehachse für ein Verriegelungselement (20) bilden, wobei das Verriegelungselement (20) mit den Löchern (28) auf die Stifte (29) aufrastbar ist.

8. Gehäuseanordnung nach einem der Ansprüche 4 bis 7, **dadurch gekennzeichnet, daß** am Ü-Rücken (22) des Verriegelungselements (20) ein Griffabschnitt (30) abgebogen ist.

9. Gehäuseanordnung nach einem der Ansprüche 4 bis 8, **dadurch gekennzeichnet, daß** an den U-Schenkeln (23, 24) des Verriegelungselements (20) ein federnder Rastarm (31) ausgebildet ist, dessen vorzugsweise wulstartiges Ende (32) in der ersten - offenen - Stellung an einer am Gehäuse (6) der Verbindungsdose (2) ausgebildeten ersten Kante (33) anliegt, so daß das Verriegelungselement (20) in der ersten - offenen - Stellung gehalten wird.

10. Gehäuseanordnung nach Anspruch 9, **dadurch gekennzeichnet, daß** das Ende (32) des federnden Rastarms (31) in der zweiten - verriegelnden - Stellung an einer am Gehäuse (6) der Verbindungsdose (2) ausgebildeten zweiten Kante (34) anliegt, so daß das Verriegelungselement (20) in der zweiten - verriegelnden - Stellung gehalten wird.

11. Gehäuseanordnung nach einem der Ansprüche 4 bis 10, **dadurch gekennzeichnet, daß** am Sockelteil (3) im Bereich der Ecken außen vorstehende Rippen (21) ausgebildet sind, die in die Ausnehmung (25) in den Enden der U-Schenkel (23, 24) der Verriegelungselemente (20) einer Verbindungsdose (2) eingreifen können.

12. Gehäuseanordnung nach einem der Ansprüche 4 bis 11, **dadurch gekennzeichnet, daß** im Sockelteil (3) mindestens eine Öffnungen für elektrische Kabel (8, 9) oder Leitungen ausgebildet ist.

13. Gehäuseanordnung nach einem der Ansprüche 4 bis 12, **dadurch gekennzeichnet, daß** am Sockelteil (3) Bohrungen (36) vorgesehen sind, durch die das Sockelteil (3) mittels Schrauben (37) in einem Schaltschrank oder an einem Maschinengehäuse (5) befestigbar ist.

14. Verbindungsdose mit einem quadratischen Gehäuse (6) und mit mindestens einer mindestens eine Anschlußklemme (7) aufweisenden Klemmenleiste zum elektrischen Anschluß eines elektrischen Kabels (8, 9) oder einer Leitung, wobei das Gehäuse (6) mindestens eine Öffnungen (10, 11) für elektrische Kabel (8, 9) oder Leitungen aufweist, insbesondere zur Verwendung bei einer Gehäuseanordnung (1) nach einem der Ansprüche 1 bis 13,
**dadurch gekennzeichnet,**
**daß** die Klemmenleiste als Steckverbinder (14) mit einem Steckerteil (15) und einem Buchsenteil (16) ausgebildet ist, und
**daß** der Steckverbinder (14) wahlweise in vier jeweils um 90° zueinander verdrehten Positionen im Gehäuse (6) befestigbar ist.

15. Verbindungsdose nach Anspruch 14, **dadurch gekennzeichnet, daß** im Bereich der Ecken im Inneren des Gehäuses (6) Stege (17) und an den Enden des Steckverbinders (14) korrespondierende Führungsnuten (18) derart angeordnet sind, daß der Steckverbinder (14) mit den Führungsnuten (18) auf die Stege (17) aufschiebbar ist.

16. Verbindungsdose nach Anspruch 14, **dadurch gekennzeichnet, daß** im Bereich der Ecken des Gehäuses (6) Führungsnuten und an den Enden des Steckverbinders (14) korrespondierende Stege derart angeordnet sind, daß der Steckverbinder (14) mit den Stegen in die Führungsnuten einschiebbar ist.

17. Verbindungsdose nach einem der Ansprüche 14 bis 16, **dadurch gekennzeichnet, daß** die Anschlußklemmen (7) des Steckverbinders (14) als Schraub-oder Federkraftklemmen ausgebildet sind.

18. Verbindungsdose nach einem der Ansprüche 14 bis 17, **dadurch gekennzeichnet, daß** das Gehäuse (6) zwei Öffnungen (10, 11) für elektrische Kabel (8, 9) oder Leitungen aufweist, insbesondere in zwei einander gegenüberliegenden Seitenwänden.

19. Verbindungsdose nach einem der Ansprüche 14 bis 18, **dadurch gekennzeichnet, daß** in den Ecken des Gehäuses (6) Dome (38) vorgesehen und in den Domen (38) Bohrungen mit Innengewinden ausgebildet sind.

20. Verbindungsdose nach einem der Ansprüche 14 bis 19, **dadurch gekennzeichnet, daß** ein U-förmiges Metallteil (39) vorgesehen ist, wobei am Rücken (40) des Metallteils (39) mindestens ein Verbindungssteg (41) angeordnet ist, der mit einer Anschlußklemme (7) des Steckverbinders (14) verbindbar ist.

21. Verbindungsdose (2) nach Anspruch 19 und 20, **dadurch gekennzeichnet, daß** in den beiden Ecken des Metallteils (39) jeweils eine Bohrung zum Einschrauben einer Schraube (42) in einen Dom (38) im Gehäuse (6) ausgebildet ist.

22. Verbindungsdose nach einem der Ansprüche 14 bis 21, **dadurch gekennzeichnet, daß** an zwei gegenüberliegenden Seiten des Gehäuses (6) je ein Verriegelungselement (20) derart schwenkbar an am Gehäuse (6) ausgebildeten Stiften (29) gehalten ist, daß die Verriegelungselemente (20) aus einer ersten - offenen - Stellung in eine zweite - verriegelnde - Stellung verbringbar sind,
wobei die Verriegelungselemente (20) im wesentlichen U-förmig gebogen sind und jeweils einen als Betätigungsbügel dienenden U-Rücken (22) und zwei U-Schenkel (23, 24) aufweisen, in deren Enden je eine Ausnehmung (25) angeordnet ist, und daß außen am Gehäuse (6) im Bereich der Ecken auf der den Verriegelungselemente (20) gegenüberliegenden Seite vorstehende Rippen (21) ausgebildet sind.

23. Verbindungsdose nach Anspruch 22, **dadurch gekennzeichnet, daß** am Ü-Rücken (22) des Verriegelungselements (20) ein Griffabschnitt (30) abgebogen ist.

24. Verbindungsdose nach Anspruch 22 oder 23, **dadurch gekennzeichnet, daß** an den U-Schenkeln (23, 24) der Verriegelungselemente (20) jeweils ein federnder Rastarm (31) ausgebildet ist, dessen vorzugsweise wulstartiges Ende (32) in der ersten - offenen - Stellung an einer am Gehäuse (6) ausgebildeten Kante (33) anliegt, so daß das Verriegelungselement (20) in der ersten - offenen - Stellung gehalten wird.

25. Verbindungsdose nach Anspruch 24, **dadurch gekennzeichnet, daß** das Ende (32) des federnden Rastarms (31) in der zweiten - verriegelnden - Stellung an einer am Gehäuse (6) ausgebildeten zweiten Kante (34) anliegt, so
daß das Verriegelungselement (20) in der zweiten - verriegelnden - Stellung gehalten wird.

## Claims

1. Housing arrangement having at least two junction boxes (2), a base part (3) and a cover (4), wherein each of the junction boxes (2) has a square housing (6), in each housing (6), there is at least one terminal strip with at least one terminal (7) for electrical connection of an electric cable (8, 9) or a line and the housing (6) has at least one opening (10, 11) for electric cables (8, 9) or lines,
**characterized in**
**that** the individual junction boxes (2) are mountable on top of one another and turned by 0°, 90°, 180° and 270°, respectively, relative to one another,
**that** the terminal strips are made as connectors (14) with a plug part (15) and a socket part (16),
**that** the connectors (14) are mountable in each junction box (2) in any of four positions which are turned by 90°, respectively, relative to one another, and
**that** the connectors (14) of two junction boxes (2) which are mounted on top of one another are connectable to one another such that the plug part (15) of one connector (14) is insertable into the socket part (16) of another connector (14).

2. Housing arrangement according to claim 1, **characterized in that** bars (17) are provided in an area of corners within the housing (6) of the junction boxes (2) and wherein corresponding guide grooves (18) are provided on end of the connectors (14) such that the guide grooves (18) of the connectors (14) are slidable onto the bars (17).

3. Housing arrangement according to claim 1 or 2, **characterized in that** the terminals (7) of the connectors (14) are screw force terminals or spring force terminals.

4. Housing arrangement having at least two junction boxes (2), a base part (3) and a cover (4), wherein each of the junction boxes (2) has a square housing (6), in each housing (6), there is at least one terminal strip with at least one terminal (7) for electrical connection of an electric cable (8, 9) or a line and the housing (6) has at least one opening (10, 11) for electric cables (8, 9) or lines, in particular according to any one of claims 1 to 3
**characterized in**
**that** the individual junction boxes (2) are mountable on top of one another,
**that** at least one pivotable locking element (20) is arranged on the housing (6) of each junction box (2) so that it is movable between a first - open - position and a second - locking - position,
**that** projecting ribs (21) are formed in an area of outside corners of the housing (6) of each junction box (2) and
**that** the locking element (20) is essentially U-shaped, having a U-bridge (22) formed as an actuating clip and two U-legs (23, 24), the ends of each having a recess (25), wherein the recesses (25) in the second - locking - position extend around the rib (21) in the corner of the housing (6) of a second junction box (2).

5. Housing arrangement according to claim 4, **characterized in that** two locking elements (20) are pivotably arranged on each of two opposing sides of the housing (6) of each junction box (2).

6. Housing arrangement according to claim 4 or 5, **characterized in that** the recesses (25) in the ends of the U-legs (23, 24) of the locking elements (20) have a depression (26) and the ends of the ribs (21) have a thickened area (27) so that the thickened area (27) locks into the depression (26) in the second - locking - position.

7. Housing arrangement according to any one of claims 4 to 6, **characterized in that** a hole (28) is formed in each of the U-legs (23, 24) of the locking element (20) and there are two pins (29) on two opposing sides of the housing (6), which forms an axis of rotation for the locking element (20), wherein the locking element (20) with the holes (28) are lockable into the pins (29).

8. Housing arrangement according to any one of claims 4 to 7, **characterized in that** a grip section (30) is formed by a bent portion of the U-bridge (22) of the locking element (20).

9. Housing arrangement according to any one of claims 4 to 8, **characterized in that** an elastic catch arm (31) is formed on the U-legs (23, 24) of the locking element (20) having a bead-like end (32) which, in the first - open - position, adjoins a first edge (33) of the housing (6) of the junction box (2) so that the locking element (20) is kept in the first - open - position.

10. Housing arrangement according to claim 9, **characterized in that** the end (32) of the elastic catch arm (31) adjoins a second edge (34) of the housing (6) of the junction box (2) in the second - locking - position, so that the locking element (20) is held in the second - locking - position.

11. Housing arrangement according to any one of claims 4 to 10, **characterized in that** outwardly projecting ribs (21) are formed in the area of the corners of the base part (3), each being engageable in the recess (25) in the ends of the U-shaped legs (23, 24) of the locking elements (20) of the junction box (2).

12. Housing arrangement according to any one of claims 4 to 11, **characterized in that** at least one opening for electric cables (8, 9) or lines is provided in the base part (3).

13. Housing arrangement according to any one of claims 4 to 12, **characterized in that** holes (36) are provided in the base part (3) so that the base part (3) can be mounted in a control cabinet or on a machine housing (5) by means of screws (37).

14. Junction box having a square housing (6) and having at least one terminal strip, which has at least one terminal (7) for electrical connection of an electric cable (8, 9) or a line, wherein the housing (6) has at least one opening (10, 11) for electric cables (8, 9) or lines, especially for use in a housing arrangement (1) according to any one of claims 1 to 13
**characterized in**
**that** the terminal strip is a connector (14) with a plug part (15) and a socket part (16) and
**that** the connector (14) is mountable in the housing (6) in any of four positions which are turned by 90° relative to one another.

15. Junction box (2) according to claim 14, **characterized in that** bars (17) are provided in an area of the corners within the housing (6) and corresponding guide grooves (18) are provided on ends of the connectors (14) such that the guide grooves (18) of the connectors (14) are slidable onto the bars (17).

16. Junction box according to claim 14, **characterized in that** guide grooves are provided in an area of the corners within the housing (6) and corresponding bars are provided on ends of the connectors (14) such that the bars of the connectors (14) are slidable into the guide grooves.

17. Junction box according to any one of claims 14 to 16, **characterized in that** the terminals (7) of the connector (14) are screw force terminals or spring force terminals.

18. Junction box according to claim 14 to 17, **characterized in that** the housing (6) has two openings (10, 11) for electric cables (8, 9) or lines, in particular one in each of two opposite side walls.

19. Junction box according to any one of claims 14 to 18, **characterized in that** domes (38) are provided in the corners of the housing (6) and holes with internal threads are formed in the domes (38).

20. Junction box according to any one of claims 14 to 19, **characterized in that** a U-shaped metal part (39) is provided, wherein at least one connecting bar (41) is formed at the back (40) of the metal part (39), which can be connected to a terminal (7) of the connector (14).

21. Junction box according to claim 19 and 20, **characterized in that** a hole is provided in each of the two corners of the metal part (39) for screwing a screw (42) into a dome (38) in the housing (6).

22. Junction box according to any one of claims 14 to 21, **characterized in that** there is a locking element (20) on each of two opposing sides of the housing (6) being pivotably arranged on pins (29) which are formed on the housing (6) such that the locking elements (20) are movable between a first - open - position and a second - locking - position, wherein the locking elements (20) are each essentially U-shaped having a U-bridge (22) which forms an actuating clip and two U-legs (23, 24), a recess (25) being arranged in each end thereof and wherein projecting ribs (21) are formed in the area of the corners outside on the housing (6) on the side opposite the locking elements (20).

23. Junction box according to claim 22, **characterized in that** a grip section (30) is formed by a bent portion of the U-bridge (22) of the locking element (20).

24. Junction box according to claim 22 or 23, **characterized in that** an elastic catch arm (31) is formed on each of the U-legs (23, 24) of the locking element (20) having a preferably bead-like end (32) which in the first - open - position adjoins the first edge (33) which is made on the housing (6) so that the locking element (20) is kept in the first - open - position.

25. Junction box according to claim 24, **characterized in that** the end (32) of the elastic catch arm (31) adjoins a second edge (34) formed on the housing (6) in the second - locking - position, so that the locking element (20) is held in the second - locking position.

## Revendications

1. Agencement de logement comprenant au moins deux boîtes de connexion (2), une partie de douille (3) et un couvercle (4), les boîtes de connexion (2) présentant chacune un logement quadratique (6), une barrette à bornes présentant au moins une borne de raccordement (7) pour le raccordement électrique d'un câble électrique (8, 9) ou d'une ligne étant disposée dans les logements (6), et les logements (6) présentant chacun au moins une ouverture (10, 11) pour des câbles électriques (8, 9) ou des lignes,
**caractérisé en ce que**
les boîtes de connexion individuelles (2) peuvent être montées les unes sur les autres de manière tournée les unes par rapport aux autres de 0°, 90°, 180° ou 270°,
**en ce que** les barrettes à bornes sont réalisées sous forme de connecteur enfichable (14) avec une partie de fiche (15) et une partie de douille (16),
**en ce que** les connecteurs enfichables (14) peuvent être fixés dans quatre positions tournées à chaque fois de 90° les unes par rapport aux autres dans une boîte de connexion (2), et
**en ce que** les connecteurs enfichables (14) de deux boîtes de connexion (2) montées l'une sur l'autre peuvent être connectés l'un à l'autre de telle sorte que la partie de fiche (15) d'un connecteur enfichable (14) puisse être enfichée dans la partie de douille (16) de l'autre connecteur enfichable (14).

2. Agencement de logement selon la revendication 1, **caractérisé en ce que** dans la région des coins à l'intérieur du logement (6) des boîtes de connexion (2) sont disposées des nervures (17) et aux extrémités des connecteurs enfichables (14) sont disposées des rainures de guidage correspondantes (18), de telle sorte que les connecteurs enfichables (14) puissent être enfoncés avec leurs rainures de guidage (18) sur les nervures (17).

3. Agencement de logement selon la revendication 1 ou 2, **caractérisé en ce que** les bornes de raccordement (7) des connecteurs enfichables (14) sont réalisées sous forme de bornes vissables ou à force de ressort.

4. Agencement de logement comprenant au moins deux boîtes de connexion (2), une partie de douille (3) et un couvercle (4), les boîtes de connexion (2) présentant chacune un logement quadratique (6), une barrette à bornes présentant au moins une borne de raccordement (7) pour le raccordement électrique d'un câble électrique (8, 9) ou d'une ligne étant disposée dans les logements (6), et les logements (6) présentant chacun au moins une ouverture (10, 11) pour des câbles électriques (8, 9) ou des lignes, notamment selon l'une quelconque des revendications 1 à 3,
**caractérisé en ce que**
les boîtes de connexion individuelles (2) peuvent être montées les unes sur les autres,
**en ce que** sur le logement (6) de chaque boîte de connexion (2) est disposé au moins un élément de verrouillage (20) pivotant de telle sorte qu'il puisse être amené d'une première position ouverte dans une deuxième position de verrouillage,
**en ce que** dans la région des coins à l'extérieur sur le logement (6) de chaque boîte de connexion (2) sont réalisées des nervures saillantes (21), et
**en ce que** l'élément de verrouillage (20) est cintré essentiellement en forme de U et présente une âme de U (22) servant d'étrier d'actionnement et deux branches de U (23, 24), dont les extrémités présentent chacune un évidement (25), les deux évidements (25) venant en prise dans la deuxième position de verrouillage à chaque fois autour de la nervure (21) d'un coin du logement (6) d'une deuxième boîte de connexion (2).

5. Agencement de logement selon la revendication 4, **caractérisé en ce que** deux éléments de verrouillage (20) sont disposés de manière pivotante sur chaque boîte de connexion (2) sur deux côtés opposés du logement (6).

6. Agencement de logement selon la revendication 4 ou 5, **caractérisé en ce que** les évidements (25) dans les extrémités des branches (23, 24) du U des éléments de verrouillage (20) présentent un renfoncement (26) et les extrémités des nervures (21) présentent un épaississement (27), de sorte que l'épaississement (27) s'encliquète dans le renfoncement (26) dans la deuxième position de verrouillage.

7. Agencement de logement selon l'une quelconque des revendications 4 à 6, **caractérisé en ce qu'**un trou (28) est réalisé à chaque fois dans les branches (23, 24) du U de l'élément de verrouillage (20) et **en ce que** deux goupilles (29) sont prévues sur des côtés opposés du logement (6), lesquelles constituent l'axe de rotation pour un élément de verrouillage (20), l'élément de verrouillage (20) pouvant être encliqueté sur les goupilles (29) avec les trous (28).

8. Agencement de logement selon l'une quelconque des revendications 4 à 7, **caractérisé en ce qu'**une portion de préhension (30) est cintrée sur l'âme (22) du U de l'élément de verrouillage (20).

9. Agencement de logement selon l'une quelconque des revendications 4 à 8, **caractérisé en ce qu'**un bras d'encliquetage élastique (31) est réalisé sur les branches (23, 24) du U de l'élément de verrouillage (20), dont l'extrémité (32) de préférence en forme de boudin s'applique dans la première position ouverte contre une première arête (33) réalisée sur le logement (6) de la boîte de connexion (2), de sorte que l'élément de verrouillage (20) soit maintenu dans la première position ouverte.

10. Agencement de logement selon la revendication 9, **caractérisé en ce que** l'extrémité (32) du bras d'encliquetage élastique (31) s'applique dans la deuxième position de verrouillage contre une deuxième arête (34) réalisée sur le logement (6) de la boîte de connexion (2), de sorte que l'élément de verrouillage (20) soit maintenu dans la deuxième position de verrouillage.

11. Agencement de logement selon l'une quelconque des revendications 4 à 10, **caractérisé en ce que** des nervures (21) saillant vers l'extérieur sont réalisées sur la partie de douille (3) dans la région des coins, et peuvent venir en prise dans l'évidement (25) dans les extrémités des branches (23, 24) du U des éléments de verrouillage (20) d'une boîte de connexion (2).

12. Agencement de logement selon l'une quelconque des revendications 4 à 11, **caractérisé en ce qu'**au moins une ouverture pour des câbles électriques (8, 9) ou des lignes est réalisée dans la partie de douille (3).

13. Agencement de logement selon l'une quelconque des revendications 4 à 12, **caractérisé en ce que** des alésages (36) sont prévus sur la partie de douille (3), à travers lesquels la partie de douille (3) peut être fixée au moyen de vis (37) dans une armoire de commutation ou sur un logement de machine (5).

14. Boîte de connexion comprenant un logement quadratique (6) et au moins une barrette à bornes présentant au moins une borne de raccordement (7) pour le raccordement électrique d'un câble électrique (8, 9) ou d'une ligne, le logement (6) présentant au moins une ouverture (10, 11) pour des câbles électriques (8, 9) ou des lignes, notamment pour l'utilisation avec un agencement de logement (1) selon l'une quelconque des revendications 1 à 13,
**caractérisée en ce que**
la barrette à bornes est réalisée sous forme de connecteur enfichable (14) avec une partie de fiche (15) et une partie de douille (16), et
**en ce que** le connecteur enfichable (14) peut être fixé dans le logement (6) au choix dans quatre positions tournées à chaque fois de 90° les unes par rapport aux autres.

15. Boîte de connexion selon la revendication 14, **caractérisée en ce que** dans la région des coins à l'intérieur du logement (6) sont disposées des nervures (17) et aux extrémités du connecteur enfichable (14) sont disposées des rainures de guidage correspondantes (18), de telle sorte que le connecteur enfichable (14) puisse être enfoncé avec ses rainures de guidage (18) sur les nervures (17).

16. Boîte de connexion selon la revendication 14, **caractérisée en ce que** dans la région des coins du logement (6) sont disposées des rainures de guidage et aux extrémités du connecteur enfichable (14) sont disposées des nervures correspondantes, de telle sorte que le connecteur enfichable (14) puisse être enfoncé avec les nervures dans les rainures de guidage.

17. Boîte de connexion selon l'une quelconque des revendications 14 à 16, **caractérisée en ce que** les bornes de raccordement (7) du connecteur enfichable (14) sont réalisées sous forme de bornes vissables ou à force de ressort.

18. Boîte de connexion selon l'une quelconque des revendications 14 à 17, **caractérisée en ce que** le logement (6) présente deux ouvertures (10, 11) pour des câbles électriques (8, 9) ou des lignes, notamment dans deux parois latérales opposées l'une à l'autre.

19. Boîte de connexion selon l'une quelconque des revendications 14 à 18, **caractérisée en ce que** des dômes (38) sont prévus dans les coins du logement (6) et des alésages avec des filetages internes sont réalisés dans les dômes (38).

20. Boîte de connexion selon l'une quelconque des revendications 14 à 19, **caractérisée en ce que** l'on prévoit une partie métallique en forme de U (39), au moins une nervure de connexion (41) étant disposée sur l'âme (40) de la partie métallique (39), et pouvant être connectée à une borne de raccordement (7) du connecteur enfichable (14).

21. Boîte de connexion (2) selon les revendications 19 et 20, **caractérisée en ce que** dans les deux coins de la partie métallique (39) est réalisé à chaque fois un alésage pour visser une vis (42) dans un dôme (38) dans le logement (6).

22. Boîte de connexion selon l'une quelconque des revendications 14 à 21, **caractérisée en ce que** sur deux côtés opposés du logement (6), un élément de verrouillage (20) respectif est maintenu à chaque fois de manière pivotante sur des goupilles (29) réalisées sur le logement (6), de telle sorte que les éléments de verrouillage (20) puissent être amenés d'une première position ouverte dans une deuxième position de verrouillage, les éléments de verrouillage (20) étant cintrés essentiellement en forme de U et présentant à chaque fois une âme de U (22) servant d'étrier d'actionnement et deux branches de U (23, 24), dont les extrémités présentent chacune un évidement (25), et **en ce qu'**à l'extérieur sur le logement (6) sont réalisées des nervures saillantes (21) dans la région des coins du côté opposé aux éléments de verrouillage (20).

23. Boîte de connexion selon la revendication 22, **caractérisée en ce qu'**une portion de préhension (30) est cintrée sur l'âme (22) du U de l'élément de verrouillage (20).

24. Boîte de connexion selon la revendication 22 ou 23, **caractérisée en ce qu'**un bras d'encliquetage élastique (31) est réalisé sur les branches (23, 24) du U de l'élément de verrouillage (20), dont l'extrémité (32) de préférence en forme de boudin s'applique dans la première position ouverte contre une première arête (33) réalisée sur le logement (6), de sorte que l'élément de verrouillage (20) soit maintenu dans la première position ouverte.

25. Boîte de connexion selon la revendication 24, **caractérisée en ce que** l'extrémité (32) du bras d'encliquetage élastique (31) s'applique dans la deuxième position de verrouillage contre une deuxième arête (34) réalisée sur le logement (6), de sorte que l'élément de verrouillage (20) soit maintenu dans la deuxième position de verrouillage.
